# EUROPEAN PATENT APPLICATION

(11) **EP 4 506 169 A1**
(43) Date of publication of application: **12.02.2025**
(21) Application number: 23784818.9
(22) Date of filing: 07.04.2023
(51) Int. Cl.: B41F 33/00

(54) **COLOR PATCH AND PRINTING SYSTEM**

(30) Priority: 07.04.2022 JP 2022063738
(71) Applicant: Komori Corporation, Tokyo 130-8666 (JP)
(72) Inventor: EJIMA, Satoshi, Tsukuba-shi, Ibaraki 300-1268 (JP); KANETSUNA, Koichi, Tsukuba-shi, Ibaraki 300-1268 (JP); MASHIMA, Kazuhisa, Tsukuba-shi, Ibaraki 300-1268 (JP)
(74) Representative: Samson & Partner Patentanwälte mbB
(86) International application number: PCT/JP2023/014344
(87) International publication number: WO 2023/195534

(57) **Abstract**

The color patch has a plurality of non-colored portions (102) arranged within a region (101) of the color patch constituted of a designated color to be reproduced on a printed work. A plurality of color portions (103) are arranged on the region (101) of the color patch having the plurality of non-colored portions (102). The non-colored portions (102) are arranged between adjacent color portions (103) among a plurality of arranged color portions (103).

## Description

### TECHNICAL FIELD

The present invention relates to a color patch and a printing system.

### BACKGROUND ART

With respect to color tone management in multicolor printing such as offset printing, there is an adjustment method for making printing colors closer to target colors by measuring solid region densities to obtain differences from target densities. In order to obtain the solid region densities, a color bar (control strip) is provided on a part of the printing product and solid patches (color patches with a halftone dot area ratio of 100%) is printed on the color bar.

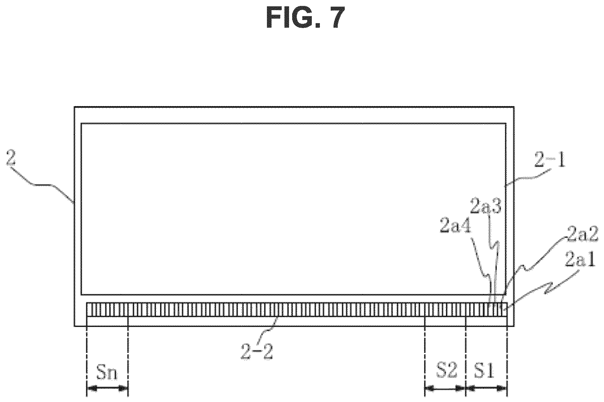

FIG. 7 shows a printing product printed by a printing press. A band-like color bar 2-2 is printed on the printing product 2 in a margin portion outside a pattern area 2-1. For example, in the case of four-color printing of cyan (C), magenta (M), yellow (Y), and black (K), the color bar 2-2 is constituted by regions S1-Sn including solid patches 2a1, 2a2, 2a3 and 2a4, which are prepared for measuring the solid region densities of the four colors. The regions S1-Sn correspond to the number of ink fountain keys in printing units for the respective colors in the printing press. The widths of the respective regions S1, S2, ..., Sn correspond to the widths of the ink fountain keys. Therefore, the total width of a color bar is determined by the number and widths of the ink fountain keys.

### CITATION LIST

### PATENT DOCUMENT

Patent Document 1: JP 5022682 B

### SUMMARY OF THE INVENTION

### TECHNICAL PROBLEM

For example, in color printing in offset printing (lithographic printing), intermediate colors are reproduced by mixing halftone dots of the four colors of CMYK as appropriate. For this reason, in this type of color printing, when the size of the halftone dots on the printing product has changed relative to the halftone dots on the plate, the color as viewed by human eyes changes also. Such changes in the halftone dots on the printing product are not reflected in the color patch, and the color does not change in the color patch, and therefore it is not possible to check the condition of the halftone dots in color management using color patches.

Therefore, conventionally, when there is a change in the color tone due to a change in the size of the halftone dots on the printing product as described above, a printing operator visually checks the difference in color tone from the sample printing product and adjusts the density. Such visual color adjustment is dependent on the skill of the operator, and therefore the time, number of times, and number of paper wastes required for the adjustment may increase more than necessary.

The present invention has been achieved to solve such problems and aims to allow color management to be carried out using a color patch even if the size of the halftone dots on the printing product has changed.

### MEANS FOR SOLVING THE PROBLEM

A color patch according to the present invention is a color patch for color adjustment, printed on a margin portion of a printing product printed by a printing press, the color patch comprising a non-colored portion in a region of the color patch constituted of a designated color intended to be reproduced on the printing product.

A printing system according to the present invention comprises: a printing press capable of printing on a supplied sheet; a measurement device configured to measure a color of a color patch printed on a margin portion of a printing product printed by the printing press to obtain color-adjusting data; and a controller configured to adjust a supply amount of ink for each color supplied to the printing press for printing the printing product on the basis of the color-adjusting data obtained by the measurement device, wherein the color patch comprises a non-colored portion in a region of the color patch constituted of a designated color intended to be reproduced on the printing product.

### EFFECT OF THE INVENTION

As described above, a non-colored portion is included in a region of a color patch in accordance with the present invention, and therefore color management can be carried out using the color patch even if the size of the halftone dots on the printing product has changed.

### BRIEF DESCRIPTION OF THE DRAWINGS

[FIG. 1] FIG. 1 shows a configuration diagram illustrating a configuration of a color patch according to an embodiment of the present invention.
[FIG. 2] FIG. 2 shows a configuration diagram illustrating a configuration of another color patch according to an embodiment of the present invention.
[FIG. 3] FIG. 3 shows a configuration diagram illustrating a configuration of another color patch according to an embodiment of the present invention.
[FIG. 4] FIG. 4 shows a configuration diagram illustrating a configuration of another color patch according to an embodiment of the present invention.
[FIG. 5] FIG. 5 shows a configuration diagram illustrating a configuration of another color patch according to an embodiment of the present invention.
[FIG. 6] FIG. 6 shows a configuration diagram illustrating a configuration of a printing system according to an embodiment of the present invention.
[FIG. 7] FIG. 7 shows a plan view schematically illustrating a printing product printed by a printing press.

### DESCRIPTION OF THE EMBODIMENTS

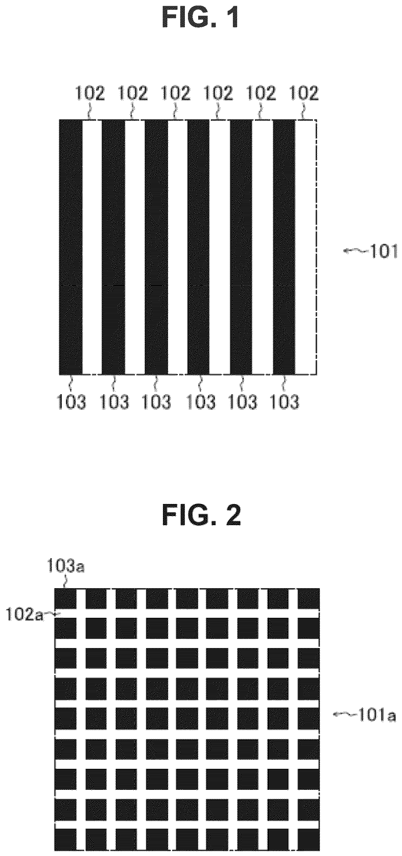

A color patch according to an embodiment of the present invention will be described with reference to FIG. 1 now. This color patch is a color patch for color adjustment, which is included in a plate for printing a printing product and which is printed on a margin portion of the printing product printed by a printing press. The printing press described above is provided with a measurement device to measure a color of the color patch to obtain color-adjusting data, and the data of the color patch is used for adjusting the color to be reproduced on the printing product, on the basis of the measurement result of the measurement device. This color patch constitutes a color bar provided on a lithographic plate and printed by a lithographic printing press for managing the color tone of a four-color ink printing press, the color being, cyan, magenta, yellow, and black, for example.

The color patch includes a white non-colored portion 102 in a region 101 of the color patch constituted by a designated color intended to be reproduced on the printing product. In this example, a plurality of non-colored portions 102 are arranged in the region 101 of the color patch. A plurality of color portions 103 are arranged in the region 101 of the color patch including the plurality of non-colored portions 102. Surrounded by the plurality of arranged color portions 103, a non-colored portion 102 is arranged between adjacent color portions 103. In this example, the plurality of non-colored portions 102 have a stripe pattern in a direction parallel to the conveyance direction of the printing product and are arranged in a direction perpendicular to the conveyance direction.

For example, the color patch may be provided for each of the four designated colors, cyan, magenta, yellow, and black. For example, in the cyan color patch, the color portion 103 is cyan. For example, in the magenta color patch, the color portion 103 is magenta. For example, in the yellow color patch, the color portion 103 is yellow. For example, in the black color patch, the color portion 103 is black.

In addition to the four colors described above, in multi-color printing in which the designated colors of orange, green, and violet are added, color patches may be provided for each of orange, green, and violet in addition to cyan, magenta, yellow, and black. It should be noted that there is no need to have non-colored portions for all color patches.

Moreover, in the color patch, the non-colored portion 102a may be lattice-shaped in the region 101a, as shown in FIG. 2. In this example, there are a plurality of arranged non-colored portions 102a and a plurality of color portions 103a are arranged in the region 101a of the color patch including the plurality of non-colored portions 102a. Each of the plurality of color portions 103a is arranged squarely in a rectangular shape (or square).

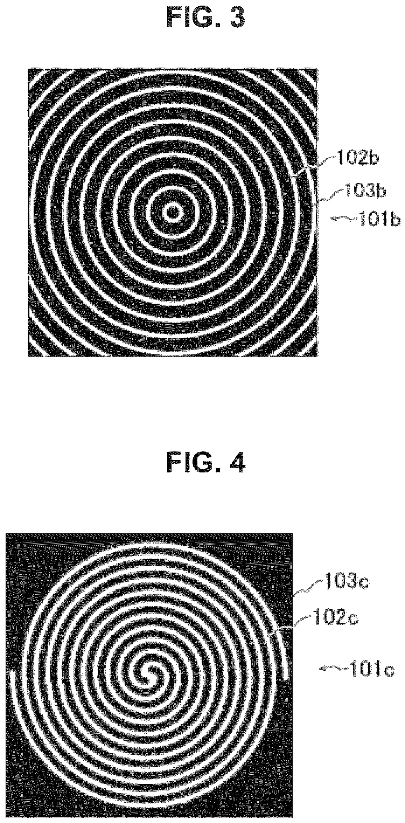

As shown in FIG. 3, each of the non-colored portions 102b may have a ring shape in the region 101b in the color patch. In this example, there are a plurality of non-colored portions 102b and the plurality of non-colored portions 102b are ring-shaped and are arranged concentrically. There are colored portions 103b between adjacent non-colored portions 102b. In this example also, there are a plurality of color portions 103b in the region 101b.

The non-colored portion 102c may have a spiral shape in the region 101c in the color patch as shown in FIG. 4. In this example, one spiral non-colored portion 102c may be formed in a continuous integral form. Regions sandwiched by the spiral non-colored portions 102c and four corner regions exterior to the spiral non-colored portion 102c constitute colored portions 103c. In this example, there is a single integral color portion 103c in the region 101c.

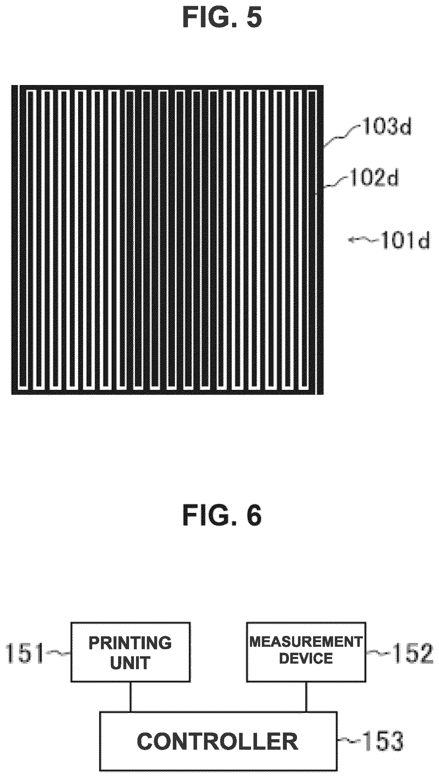

Moreover, the non-colored portion 102d may have a tortuous meandering shape in the region 101d in the color patch, as shown in FIG. 5. The non-colored portion 102d having a meandering shape may be formed in a continuous integral form. The region other than the non-colored portion 102d having a meandering shape constitutes the color portion 103d. In this example, the region 101d includes a single integral color portion 103d.

Next, a printing system according to an embodiment of the present invention will be described with reference to FIG. 6. This printing system includes a printing press 151 capable of printing on a supplied sheet (e.g., paper), and a measurement device 152 for measuring a color of a color patch printed on a margin portion of a printing product printed by the printing press 151 to obtain color-adjusting data.

The printing system also includes a controller 153 which adjusts the ink supply amount for each color supplied to the printing press 151 for printing the printing product on the basis of the color-adjusting data obtained by the measurement device 152. As described above, the color patch includes a non-colored portion in the region of the color patch constituted by the designated color intended to be reproduced on the printing product. For example, the color patch may include a plurality of non-colored portions arranged in the region of the color patch. The controller 153 includes, for example, a normal printing result of the color patch according to the embodiment described above as a reference by measuring the color with the measurement device 152. The controller 153 carries out the control by comparing the result obtained by the measurement device 152 in an actual printing operation with the stored reference (see patent document 1).

As described above, there are non-colored portions in the region of the color patch constituted of a designated color intended to be reproduced on the printing product, and therefore the change in the size of the halftone dots on the printing product is reflected in the color portion, allowing color management using the color patch.

Hereinafter, the difference between a case using a solid patch and a case using a color patch in accordance with the embodiment wherein a plurality of non-colored portions 102 having a stripe pattern are included will be examined, using the case where the halftone dots have become larger as an example.

When using a solid patch, the density is adjusted to a reference value (same as sample printing) by measuring the solid patch. The ink density is the same as that of the sample and the color should theoretically be the same in the printing product. However, when checking patterns on the printing product, the color tone may be different due to other factors. For example, when the halftone dots become larger on the printing product, the colored area increases. Moreover, when the halftone dots on the printing product appear larger, the density of the color on the pattern appears higher in human eyes.

As described above, even if the halftone dots have become larger on the printing product, it is not possible to confirm (measure) the state of the halftone dots in the solid patch, and therefore it is unclear to what extent the density should be reduced using the measurement results. For this reason, the operator adjusts the color tone (such as reducing the density) while checking the color of the sample pattern.

Meanwhile, in the case of using a color patch (striped patch) including a plurality of non-colored portions that are stripe-shaped, when halftone dots become larger on the printing product, this condition is also reflected on the color patch so that the dots in the color portion become larger, and therefore the area of the plurality of non-colored portions decreases. This condition is also reflected in the result of the color patch measurements.

For example, the L*a*b* value of a striped patch on the printing product is measured by the measurement device in a trial printing. When the halftone dots become larger, the area of the non-colored portion in the striped patch decreases and the area of the color portion increases relatively, and therefore the L*a*b* value in the measurement result changes. The color difference can be obtained by using the measurement result, and therefore the obtained value can be fed back and the color tone adjustment (reducing the density) can be performed automatically. It should be noted that the L*a*b* value is related to a commonly used colorimetric system, where "L*" represents lightness and "a*b*" represents chromaticity. "a*" represents the red direction, "-a*" represents the green direction, "b*" represents the yellow direction, and "-b*" represents the blue direction. Moreover, the color difference is the difference between the colors and is the value of the distance between the points of the reference color and the measurement color on the L*a*b* color space.

As a result of the actual trial printing, the best evaluation result was obtained when the color tone was automatically adjusted using a striped patch with a color portion area ratio of 85%. In this trial printing, the plan view shape of the patch was 4.375 mm wide and 3.5 mm high. In this condition, it is considered that more accurate color management can be carried out by adjusting the color tone using a striped patch with a color portion area ratio of 85%.

For example, in a rotary printing press, the ink contained in the ink fountain is supplied to an ink fountain roller via a plurality of ink fountain keys, and the ink supplied to the ink fountain roller is supplied to the printing plate via a group of ink rollers. As described above, since the width of each region of the color bar illustrated in FIG. 7 is determined by the width of the ink fountain key, the width of one color bar region is 35 mm when a printing press with a 35 mm wide ink fountain key is used. Therefore, the width of the above patch has a value obtained by dividing one color bar region (35 mm) by eight patches, which are the sum of seven color patches and one patch without color. Moreover, the height of the patch described above can be a value determined by the performance of the color tone management mechanism constituted by the measurement device 152 and the controller 153, and can be, for example, a value between 3.0 and 5.0 mm.

Moreover, it has been found that the use of a color patch that includes non-colored portions having stripes parallel to the conveyance direction of the printing product makes it difficult to be affected by printing obstacles such as double sheet feeding that occur during printing and uncleanliness.

As described above, since a non-colored portion is included in the region of the color patch in accordance with the present invention, color management can be carried out using the color patch even if the size of the halftone dots on the printing product changes.

It should be noted that the present invention is not limited to the embodiments described above, and it is obvious that many variations and combinations can be implemented by a person skilled in the art within the technical concept of the present invention. For example, although lithographic printing is used as an example in the above, the present invention is not limited to this and can be applied similarly to other color printing.

### REFERENCE SIGNS LIST

101...area, 102...non-colored portion, 103...color portion, 151... printing press, 152...measurement device, 153...controller, 2... printing product, 2-1...pattern area, 2-2...color bar, 2a1-2a4...solid patch, S1-Sn...color bar region

## Claims

1. A color patch for color adjustment, printed on a margin portion of a printing product printed by a printing press, the color patch comprising a non-colored portion in a region of the color patch constituted of a designated color intended to be reproduced on the printing product.

2. The color patch according to claim 1, comprising a plurality of the non-colored portions which are arranged in the region of the color patch.

3. The color patch according to claim 1 or 2, wherein
the printing press is provided with a measurement device configured to measure a color of the color patch to obtain color-adjusting data, and
the color-adjusting data of the color patch is used for adjusting the color to be reproduced on the printing product on the basis of the measurement result of the measurement device.

4. A printing system, comprising:
a printing press capable of printing on a supplied sheet;
a measurement device configured to measure a color of a color patch printed on a margin portion of a printing product printed by the printing press to obtain color-adjusting data; and
a controller configured to adjust a supply amount of ink for each color supplied to the printing press for printing the printing product on the basis of the color-adjusting data obtained by the measurement device, wherein
the color patch comprises a non-colored portion in a region of the color patch constituted of a designated color intended to be reproduced on the printing product.

5. The printing system according to claim 4, wherein
the color patch comprises a plurality of non-colored portions which are arranged in the region of the color patch.
